# EUROPEAN PATENT APPLICATION

(11) **EP 1 741 537 A1**
(43) Date of publication of application: **10.01.2007**
(21) Application number: 06253016.7
(22) Date of filing: 12.06.2006
(51) Int. Cl.: B29C 45/50

(54) **Injection device of injection molding machine**

(30) Priority: 06.07.2005 JP 2005197303
(71) Applicant: FANUC LTD, Minamitsuru-gun, Yamanashi 401-0597 (JP)
(72) Inventor: Nishimura, Koichi, Susono-shi Shizuoka, 410-1115 (JP); Shima, Koji, Fujiyoshida-shi Yamanashi 403-0005 (JP); Naito, Yasuo c/o Fanuc Dai3virakaramatsu, Minamitsuru-gun, Yamanashi 401-0511 (JP)
(74) Representative: Billington, Lawrence Emlyn

(57) **Abstract**

An outer ring (3a) of a load cell (3) is mounted on a pusher plate (1). A rotation transmission member (4) mounting portion (3e) is extended from an inner ring (3c) of the load cell (3), and a rotation transmission member (4) connected to an injection screw (18) is supported by the rotation transmission member mounting portion (3e) through a bearing (5). A resin pressure applied to the injection screw (18) is applied to the inner ring (3c) of the load cell (3) through the rotation transmission member (4) and the rotation transmission member mounting portion (3e), and the distortion generating portion (3b) is distorted to detect the resin pressure. A rotation deflection of the bearing generated when the rotation transmission member is rotated by external power is absorbed by the thin portion (3d) (necking portion) formed on the rotation transmission member mounting portion (3e).

## Description

### BACKGROUND OF THE INVENTION

### 1. Field of the Invention

The present invention relates to an injection device of an injection molding machine having a load detector which detects a resin pressure applied to an injection screw.

### 2. Description of the Related Art

According to an in-line screw type injection device in an injection molding machine, an injection screw is rotated to melt and knead a resin in a heating cylinder, retreats the injection screw while applying a back pressure to the resin by the injection screw, and the molten resin is metered at the retreated position (metering process). After this process, the injection screw is moved forward to inject the molten resin into a mold (injecting process) and then, a predetermined hold pressure is applied to the injected resin (pressure holding process).

In the in-line screw type injection device, in order to control the back pressure to be applied to the resin in the metering process, or in order to control the injection pressure and the hold pressure in the injecting process and the pressure holding process, the resin pressure applied to the injection screw is detected using a load detector such as a load cell, and pressure feedback control is performed based on the detected resin pressure.

In a mode of the injection device of a conventional injection molding machine, a pusher plate on which the injection screw is rotatably mounted is supported by a tie bar such that the pusher plate can slide with respect to the tie bar, and the pusher plate is moved in the axial direction using a ball screw/nut mechanism. The pusher plate and a nut of the ball screw/nut mechanism are connected to each other through the load detector. The nut of the ball screw/nut mechanism is moved in the axial direction by rotating the ball screw of the ball screw/nut mechanism to provide the injection screw with an axial force. The axial force at that time is detected by the load detector.

In the injection device of this type, in order to precisely detect the resin pressure by the load detector, the various proposals are made as follows.

A guide plate is supported by a tie bar such that the guide plate can slide with respect to the tie bar, a nut of a ball screw/nut mechanism is supported by the guide plate so that a weight of the ball screw/nut mechanism is not applied to the load detector, and the detection precision of the resin pressure detection by the load detector is enhanced (see Japanese Patent Application Laid-open No. 9-29793).

A torque of a ball screw/nut mechanism is not applied to a load cell as a load detector (see Japanese Patent Application Laid-open No. 2000-218663).

A nut of a ball screw/nut mechanism is fixed to a load cell and variation in mounting angle of the nut with respect to the load cell is suppressed (see Japanese Patent Application Laid-open No. 2002-347071).

According to another mode of the injection device of the conventional injection molding machine, a rear end of the injection screw is connected to a screw support shaft, and the screw support shaft is rotatably held in a bearing box. The bearing box is connected to an inner ring of a load cell, and an outer ring of the load cell is fixed to a movable plate. A transmission shaft is supported by the movable plate, and is spline-coupled to the screw support shaft. The transmission shaft is driven by a belt transmission mechanism.

In the injection device of this type, in the injecting process and the pressure holding process, the movable plate is driven in the axial direction, and the injection screw is driven in the axial direction through the load cell, the bearing box and the screw support shaft. In the metering process, the injection screw is rotated by the belt transmission mechanism, and the movable plate is driven in the axial direction to apply the back pressure. In this case, the transmission shaft which is supported by the movable plate receives a force in its radial direction by a tension of the belt of the belt transmission mechanism and moment is generated. The moment is absorbed by the spline-coupling so that the moment is not transmitted to the screw support shaft and the load cell, thereby enhancing the detection precision of resin pressure by the load cell (see Japanese Patent Application Laid-open No. 2000-117789).

In the injection device as described in the above mentioned Japanese Patent Application Laid-open No. 2000-117789, in which the load detector such as the load cell is interposed between the member (bearing box) which supports the member which rotates together with rotation of the injection screw and a movable member which drives the injection screw in the axial direction, when the resolution of the load detector is enhanced and the resin pressure is detected precisely, a bearing which supports the member which rotates together with the rotation of the injection screw has slight rotation deflection, the rotation deflection adversely affects the resin pressure to be metered by the load detector as disturbance, and there is a problem that the resin pressure can not be detected precisely.

### SUMMARY OF THE INVENTION

The present invention provides an injection device of an injection molding machine in which a load detector is disposed between a straightly moving member and a rotation transmission member connected to an injection screw, a resin pressure applied to the injection screw is metered by the load detector. The load detector includes an inner ring, an outer ring, a distortion generating portion which connects the outer ring and the inner ring with each other, and a rotation transmission member mounting portion which extends in an axial direction from the inner ring. The outer ring of the load detector is fixed to the straightly moving member. The rotation transmission member is mounted on the rotation transmission member mounting portion of the load detector through a bearing such that the rotation transmission member can rotate but can not move in the axial direction. At least a portion of the rotation transmission member mounting portion is made thin.

The rotation transmission member mounting portion extends from the inner ring in parallel to the rotation center axis of the rotation transmission member, and a connecting portion of the rotation transmission member mounting portion which is connected to the inner ring can be made thin.

According to the invention, the injection device of the injection molding machine has the above-described structure. Therefore, even when a rotation deflection is generated in the bearing which supports the rotation transmission member by the rotation of the rotation transmission member, the rotation deflection is absorbed by the necking portion of the rotation transmission member mounting portion, the rotation deflection is scarcely transmitted to the inner ring of the load detector and thus, the resin pressure can be detected precisely.

### BRIEF DESCRIPTION OF THE DRAWINGS

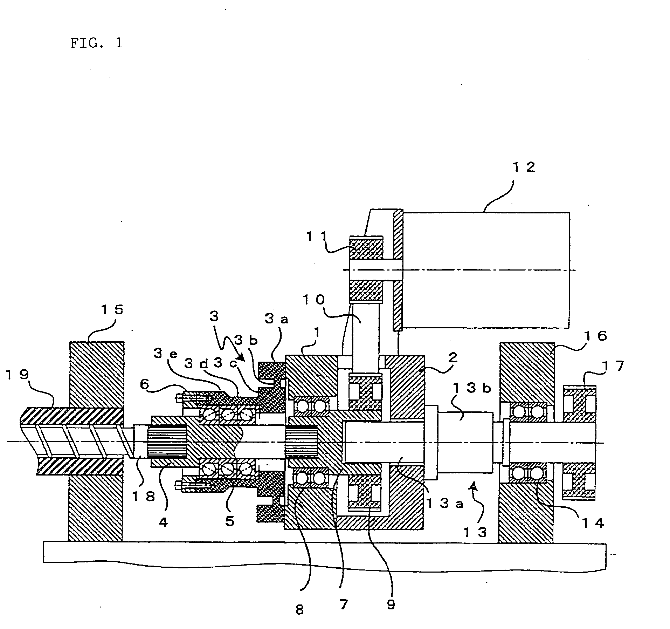

Fig. 1 is a diagram used for explaining an injection device of an embodiment of the present invention.

### DETAILED DESCRIPTION OF THE PREFERRED EMBODIMENTS

Fig. 1 is a diagram used for explaining the injection device of a first embodiment of the invention, and is a sectional view taken along a central portion thereof.

An injection screw 18 is inserted into a heating cylinder 19 mounted on a front plate 15. A rear end shaft of the injection screw 18 is fixed to a rotation transmission member 4. A pusher plate 1 is guided by a guide rod, a linear guide or the like which is not shown in the figure, and can move in an axial direction of the injection screw 18. A load cell 3 as a load detector is mounted on a front surface of the pusher plate (on the side of the injection screw).

The load cell 3 includes an outer ring 3a, an inner ring 3c, a distortion generating portion 3b for connecting the outer ring 3a and the inner ring 3c with each other, and a rotation transmission member mounting portion 3e which integrally formed with the inner ring 3c and which extends in the axial direction. The rotation transmission member mounting portion 3e has a thin portion (necking portion 3d) at a location connected to the inner ring 3c.

The outer ring 3a of the load cell 3 is fixed to a front surface of the pusher plate 1. The rotation transmission member 4 is mounted on the rotation transmission member mounting portion 3e of the load cell 3 through a bearing 5 such that the rotation transmission member 4 can rotate but can not move in the axial direction. A reference symbol 6 represents a bearing holding member.

A driven pulley shaft 7 is mounted on the pusher plate 1 through a bearing 8 such that the driven pulley shaft 7 can rotate but can not move in the axial direction. A rear end of the rotation transmission member 4 is spline-coupled to the driven pulley shaft 7 and the relative rotation of the rotation transmission member 4 with respect to the driven pulley shaft 7 is restrained but the rotation transmission member 4 can move in the axial direction with respect to the driven pulley shaft 7. A driven pulley 9 is mounted on a rear end of the driven pulley shaft 7.

A housing 2 is fixed to the pusher plate 1. Thrust drive means is connected to the housing 2. The thrust drive means drives the injection screw 18 and the pusher plate 1 in the axial direction (lateral direction in Fig. 1) to inject molten resin in the heating cylinder 19 into a mold (not shown). The thrust drive means includes a ball screw/nut mechanism 13 and a motor (not shown).

A ball screw nut 13b of the ball screw/nut mechanism 13 is fixed to the housing 2. A pair of motor mounting portions (not shown) extend from both sides of the housing 2 as viewed from the axial direction of the injection screw. A screw rotating motor 12 for driving and rotating the injection screw 18 is mounted on the motor mounting portions. A timing belt 10 is stretched between a driving pulley 11 provided on an output shaft of the screw rotating motor 12 and the driven pulley 9.

A ball screw shaft 13a of the ball screw/nut mechanism 13 is rotatably mounted on an end plate 16 through a bearing 14. A driven pulley 17 for rotating the ball screw shaft 13a is mounted on a rear end of the ball screw shaft 13a. A timing belt is stretched between the driven pulley 17 and a driving pulley provided on an output shaft of an injection motor (not shown). The injection screw 18, the pusher plate 1 and the like are moved in the axial direction by the injection motor. The ball screw nut 13b of the ball screw/nut mechanism 13 engages a screw of the ball screw shaft 13a.

Next, the operation of the injection device will be explained.

At the time of metering and kneading operation in the metering process, the screw rotating motor 12 is driven, the driven pulley 9 is rotated through the driving pulley 11 and the timing belt 10, the rotation force is transmitted to the driven pulley shaft 7 which fixes the driven pulley 9 and the rotation transmission member 4 which is spline-coupled to the driven pulley shaft 7, and the injection screw 18 mounted on the rotation transmission member 4 is rotated.

When the injection screw 18 is rotated, resin supplied into the heating cylinder 19 is melted, the injection screw 18 is retreated (moved rightward in Fig. 1) by the pressure of the molten resin. The retreating force of the injection screw 18 is transmitted to the rotation transmission member 4, and is further transmitted through the bearing 5 to the rotation transmission member mounting portion 3e, the inner ring 3c, the distortion generating portion 3b, the outer ring 3a and the pusher plate 1 which fixes the outer ring 3a and the pusher plate 1 and the housing 2 are retreated.

By driving the injection motor, a back pressure is generated on the molten resin. That is, by driving the injection motor, the driven pulley 17 and the ball screw shaft 13a are rotated. The rotation of the ball screw shaft 13a moves the ball screw nut 13b forward (leftward in Fig. 1) and as a result, the housing 2 fixed to the ball screw nut 13b and the pusher plate 1 are moved forward. As a result, the injection screw 18 moves forward through the load cell 3 and the bearing 5, and a force corresponding to a preset back pressure is generated on the resin.

If the resin pressure becomes greater than the preset back pressure, the injection screw 18, the rotation transmission member 4, the load cell 3, the pusher plate 1 and the housing 2 retreat. The retreating force of the injection screw 18 is applied to the inner ring 3c of the load cell 3 through the rotation transmission member 4, distortion is generated in the distortion generating portion 3b between the outer ring 3a fixed to the pusher plate 1 and the inner ring 3c, and the resin pressure is detected.

In the injecting process, the operation of the screw rotating motor 12 is stopped, the injection motor is driven and the ball screw shaft 13a is rotated through the driven pulley 17. As a result, the ball screw nut 13b which is threadably engaged with the ball screw shaft 13a is fixed to the housing 2. Therefore, the ball screw nut 13b does not rotate, moves forward along the axis of the ball screw shaft 13a, moves the housing 2 fixed to the ball screw nut 13b and the pusher plate 1 to which the housing 2 is fixed forward, moves the rotation transmission member 4 and the injection screw 18 fixed to the rotation transmission member 4 forward through the load cell 3 mounted on the pusher plate 1 and the bearing 5, thereby carrying out the injection operation.

The injection motor is driven also in the pressure holding process, the rotating force is converted into a force in the axial direction by the ball screw/nut mechanism 13, and the force is applied to the pusher plate 1. As a result, the injection screw 18 moves forward and a pressure (preset hold pressure) is applied to the resin.

In the injecting process and the pressure holding process also, a force for forwardly moving the pusher plate 1 generated by driving the injection motor is applied. The resin pressure applied to the injection screw 18 is transmitted to the inner ring 3c of the load cell through the rotation transmission member 4 and the rotation transmission member mounting portion 3e of the load cell 3, and the distortion generating portion 3b is distorted. As a result, the resin pressure (injection pressure, hold pressure) can be detected.

The injection device of the embodiment is operated as described above. Therefore, at the time of the metering and kneading operation in the metering process, the screw rotating motor 12 is driven, the driven pulley shaft 7, the rotation transmission member 4 and the injection screw 18 mounted on the rotation transmission member 4 are rotated. In the metering process, the resin pressure is detected by the load cell 3, the injection motor is driven and the back pressure control is performed.

In the back pressure control, if the resolution of the load cell 3 is enhanced to precisely meter the resin pressure, slight rotation deflection generated in the bearing 5 by the rotation of the rotation transmission member 4 becomes the disturbance for the detection of resin pressure of the load cell 3, and the detection precision is deteriorated.

Hence, in this embodiment, the rotation transmission member mounting portion 3e is extended in the axial direction from the inner ring 3c of the load cell 3, and the rotation transmission member 4 is mounted on the rotation transmission member mounting portion 3e through the bearing 5. A region of the rotation transmission member mounting portion 3e close to a portion which is connected to the inner ring 3c is made thin (i.e., the necking portion 3d is formed). The necking portion 3d prevents the adverse influence of the rotation deflection of the bearing 5 on the measurement of the resin pressure by the load cell 3.

That is, the slight rotation deflection generated in the bearing 5 by the rotation of the rotation transmission member 4 is transmitted to the rotation transmission member mounting portion 3e, and the vertical movement (vibration) with respect to the rotation center axis is generated, but this movement (vibration) is absorbed by the necking portion 3d and this prevents the movement from being transmitted to the inner ring 3c. Therefore, a pressure detected by the distortion generating portion 3b of the load cell 3 becomes the resin pressure which is applied to the inner ring 3c of the load cell 3 through the injection screw 18, the rotation transmission member 4, the bearing 5 and the rotation transmission member mounting portion 3e, not adversely affected by the rotation deflection of the bearing 5, and the resin pressure can be detected precisely.

## Claims

1. An injection device of an injection molding machine in which a load detector is disposed between a straightly moving member and a rotation transmission member connected to an injection screw, a resin pressure applied to the injection screw is metered by the load detector, wherein
the load detector comprises an inner ring, an outer ring, a distortion generating portion which connects the outer ring and the inner ring with each other, and a rotation transmission member mounting portion which extends in an axial direction from the inner ring,
the outer ring of the load detector is fixed to the straightly moving member,
the rotation transmission member is mounted on the rotation transmission member mounting portion of the load detector through a bearing such that the rotation transmission member can rotate but can not move in the axial direction,
at least a portion of the rotation transmission member mounting portion is made thin.

2. The injection device of the injection molding machine according to claim 1, wherein the rotation transmission member mounting portion extends from the inner ring in parallel to the rotation center axis of the rotation transmission member, and a connecting portion of the rotation transmission member mounting portion which is connected to the inner ring is made thin.
